(19) Europäisches Patentamt
European Patent Office
Office européen des brevets

(11) Publication number: 0 304 946 A2

(12) **EUROPEAN PATENT APPLICATION**

(21) Application number: 88113981.0

(22) Date of filing: 26.08.88

(51) Int. Cl.⁴: C08L 83/04 , C08J 3/12

(30) Priority: 26.08.87 JP 212580/87

(43) Date of publication of application: 01.03.89 Bulletin 89/09

(84) Designated Contracting States: BE DE FR GB

(71) Applicant: TORAY SILICONE COMPANY, LIMITED
2-3-16, Muro-machi Nihonbashi
Chuo-ku Tokyo 103(JP)

(72) Inventor: Shimizu, Koji
25-14 Aobadai 4-chome
Ichihara-shi Chiba Prefecture(JP)
Inventor: Sato, Hiroshi
13-4 Aobadai 7-chome
Ichihara-shi Chiba prefecture(JP)
Inventor: Harashima, Asao
6 Yushudai Nishi 1-chome
Ichihara-shi Chiba Prefecture(JP)
Inventor: Hamada, Mitsuo
5-17 3-chome
Kisarazu-shi Chiba Prefecture(JP)

(74) Representative: Spott, Gottfried, Dr. et al
Patentanwälte Spott und Puschmann
Sendlinger-Tor-Platz 11
D-8000 München 2(DE)

# (54) Finely divided silicone rubber additive material and method for producing same.

(57) The finely divided cured silicone rubber particles of the present invention contain at least one member of a specified class of silanes or their partial hydrolysis products. The silane is present either in the free state or chemically bonded to the silicone rubber, and the particles have a particle diameter of 1 mm or less. The particles exhibit excellent compatibility with a variety of materials, including various organic resins and synthetic rubbers, and when added to or admixed with these materials enhance the physical properties of these materials and are durably bonded within matrices of these materials.

EP 0 304 946 A2

## FINELY DIVIDED SILICONE RUBBER ADDITIVE MATERIAL AND METHOD FOR PRODUCING SAME

The present invention concerns a finely divided silicone rubber additive material and a method for manufacturing this material. In particular, this invention concerns a finely divided cured silicone rubber which is particularly suited for use as a reinforcing agent for a variety of materials, including elastomers and resins.

In recent years, finely divided silicone rubber particles have been used as additives for organic resins to impart or improve properties such as, for example, water resistance, shock tolerance, strength, and as internal stress-relaxation agents for hard and brittle organic resins. Finely divided silicone rubber particles and methods of manufacture these materials are known in the art. These methods include, for example, spraying a liquid silicone rubber composition into a high-temperature gas where the composition hardened in spray form to yield a silicone rubber particulate having spherical particles with excellent lubricating properties

The objectives of this invention are achieved by a novel finely divided cured silicone rubber containing at least one member from a specified group of functionally substituted silanes. The silane can be present in the form of the free compound, a partial hydrolyzate thereof, or is chemically bonded to the cured silicone rubber.

The present invention relates to a finely divided additive material having a maximum particle diameter of up to 1 mm and comprising a cured silicone rubber and from 0.1 to 10 percent, based on the weight of said material, of a silane or partial hydrolyzate thereof, where said silane is represented by the general formula

$$\overset{R^1}{YSi}(OR^2)_{3-n}, \qquad I$$

Y represents an alkenyl radical or a functional group bonded to the silicon atom of said silane by an alkylene radical, said functional group is selected from the group consisting of epoxy, amino, acryloxy, methacryloxy and mercapto, $R^1$ represents a monovalent hydrocarbon radical, $R^2$ is a hydrogen atom or is selected from the same group as $R^1$, and $\underline{n}$ is an integer from 0 to 2, inclusive, and where said silane or partial hydrolysis product thereof is present is the unreacted form or is chemically bonded to said silicone rubber.

This invention also relates to methods for manufacturing the finely divided cured silicone rubber particles of this invention, the method comprising the sequential steps of

I. dispersing as the discontinuous phase in water a curable liquid silicon rubber composition comprising

(A) a diorganopolysiloxane having at least 2 silicon-bonded hydroxyl groups per molecule,

(B) an organohydrogenpolysiloxane having at least 2 silicon-bonded hydrogen atoms per molecule,

(C) a curing catalyst, and

(D) a silane represented by the general formula

$$\overset{R^1}{YSi}(OR^2)_{3-n} \qquad (I)$$

or a partial hydrolysis product thereof, where Y represents a terminally unsaturated alkenyl radical or a functional group bonded to the silicon atom of said organosilicon compound by an alkylene radical, said functional group is selected from the group consisting of epoxy, amino, acryloxy, methacryloxy and mercapto, R1 represents a monovalent hydrocarbon radical, $R^2$ represents a hydrogen atom or a hydrocarbon radical selected from the same group as $R^1$, and $\underline{n}$ is an integer ranging from 0 to 2.

II. bringing said dispersion into contact with a gas or liquid having a temperature higher than that said water to cure said composition in the form of said finely divided additive having a particle diameter of one mm or less characterized by the fact that additive contains said organosilicon compound in either free form or chemically bonded within said particle.

In accordance with another embodiment of the method present method, the diorganopolysiloxane identified hereinbefore as (A) and referred to hereinafter as ingredient A1 contains two silicon-bonded alkenyl groups in each molecule in place of the two hydroxyl groups of ingredient A and is reacted with the organohydrogenpolysiloxane referred to hereinbefore as ingredient B in the presence of a platinum-containing catalyst, referred to hereinafter as ingredient C1.

The characterizing feature of the finely divided cured silicone rubber additive of this invention that distinguishes it from the aforementioned prior art is the presence of a functionally substituted alkoxysilane corresponding to the foregoing formula I or a partial hydrolyzate of this alkoxysilane. In this formula Y represents a alkenyl radical such as vinyl, or a functional group that is bonded to the silicon atom of the silane through an alkylene radical containing from 1 to 10 or more carbon atoms. The functional group can be epoxy, amino, acryloxy, methacryloxy or mercapto, and the alkylene radical, and is bonded to the silicon atom by means of an alkylene radical is preferably methylene, ethylene or propylene, this preference being based on the availability of the corresponding intermediates used to prepare the silane.

In one embodiment the substituent represented by Y is an alkenyl radical containing from 2 to 10 or more carbon atoms. This alkenyl radical is preferably allyl or vinyl.

Examples of the combinations of functional groups and alkylene radicals that constitute the second of the two embodiments of Y include but are not limited to gamma-glycidoxypropyl, 3,4-epoxycyclohexylethyl, gamma-acryloxypropyl, gamma-methacryloxypropyl, gamma-aminopropyl, gamma-aminobutyl, N-beta-(aminoethyl)-gamma-aminopropyl and gamma-mercaptopropyl groups.

The monovalent hydrocarbon radical represented by $R^1$ in the formula for the silane can be alkyl such as methyl, ethyl, or propyl, or aryl such as phenyl. The substituent represented by $-OR^2$ can be an alkoxy group where $R^2$ is selected from the same group as $R^1$, or $-OR^2$ can represent a hydroxyl group.

Specific examples of silanes represented by formula I include alkoxysilanes containing epoxy groups such as gamma-glycidoxypropyltrimethyoxysilane, gamma-glycidoxypropylmethyl - dimethoxysilane, 3,4-epoxycyclohexyltrimethoxysilane, and 3,4-epoxycyclohexylmethyldimethoxysilane; alkoxysilanes containing alkenyl groups such as vinyltrimethoxysilane, vinyltriethoxysilane, vinyltri(methoxyethoxy)silane, vinyl tri-isopropoxysilane, gamma-acryloxypropyltrimethoxysilane, and gamma-methacryloxypropyl trimethoxysilane; alkoxysilanes containing mercapto groups, such as gamma-aminopropyltrimethoxysilane, gamma-aminopropylmethyldimethoxysilane, N-beta(aminoethyl)-gamma-aminopropyltrimethoxysilane, gamma-mercaptopropyltrimethoxysilane, and gamma-mercaptopropyl methyl dimethoxysilane; and alkoxysilanes with hydroxyl groups substituted for all or some of the alkoxy groups.

The silane or its hydrolysis product can be present as an unreacted ingredient in the cured silicone rubber powder of this invention or can be chemically bonded to the silicone rubber. In either embodiment the maximum diameter of the cured silicone rubber particles is 1 mm.

If the silane represented by formula I is present as an unreacted ingredient, it is dispersed through the silicone rubber particles in the form indicated by formula I.

In a second embodiment of the present cured silicone rubber additive the silane represented by formula I has reacted with at least one of the ingredients of the composition used to prepare the finely divided cured silicone rubber. This can occur, for example, by a condensation reaction between the alkoxy group or hydroxyl group of the silane with the silanol group of the diorganopolysiloxane that is the main ingredient of one type of composition used to prepare the cured silicone rubber particles of this invention.

Chemical bonding of at least some of the silane to the silicone rubber is preferable because this improves the adhesive properties of the silicone rubber particles, particularly the durability of the adhesive bond formed between the particles and organic resins into which the particles are incorporated as additives.

The concentration of silane in the cured silicone rubber additives of this invention is typically in the range of from 0.1 to 15 wt%, preferably from 0.5 to 10 wt%. When the concentration of silane is less than about 0.1 wt%, there is a decline in the ability of the particles to be miscible with and dispersible in organic resins. When the additive is combined with an organic resin there tends to be a reduction in the adhesion between the particles of the additive and the organic resin layer.

When the concentration of silane exceeds about 15 wt%, the cured silicone rubber particles become too hard, and tend to provide less than desirable performance when used, for example, as a stress-relaxation agent in organic resins.

Any of the known cured silicone rubbers can be used as the silicone rubber portion of the present additive. Examples include 1) organoperoxide-cured silicone rubber prepared by heating a diorganopolysiloxane containing at least one vinyl radical in the presence of an organoperoxide; 2) addition-reaction-cured silicone rubber prepared from a composition comprising a diorganopolysiloxane containing silicon-bonded vinyl groups, a diorganopolysiloxane containing silicon-bonded hydrogen atoms and a platinum compound; 3) compositions cured in the presence of an organotin compound by a dehydrogenation/-condensation reaction between a diorganopolysiloxane having active hydrogen-containing functional group on both ends of the molecule and a diorganopolysiloxane having silicon-bonded hydrogen atoms; and 4) compositions cured by a condensation reaction between a diorganopolysiloxane having terminal hydroxyl groups and organosilane containing hydrolyzable groups in the prsence of an organotin compound or a titanic acid ester.

Silicone rubber compositions that cure by an platinum-catalyzed addition reaction or one of the aforementioned condensation reactions are preferable due to ease of handling and manufacture of the silicone rubber particulate.

One of the requirements for the cured silicone rubber particles is that the maximum diameter of the particles be no larger than 1 mm, preferably 0.1 mm or less. If the particle diameter exceeds 1 mm, dispersibility of the particles in the organic resin is reduced, with a resulting loss of reinforcing effect on the physical properties of the resin.

There are no particular limitations on the form of the silicone rubber particulate, which varies depending on the type of organic resin into which the particles will be incorporated and the physical properties to be reinforced. Spherical particles are preferable from the standpoint of ease of addition and dispersibility.

The various methods for manufacturing the cured silicone rubber of the present invention will now be explained in detail.

In accordance with one embodiment a liquid silicone rubber composition is prepared from an organopolysiloxane having at least two silicon-bonded hydroxyl groups in each molecule (ingredient A), an organohydrogenpolysiloxane having at least two silicon-bonded hydrogen atoms in each molecule (ingredient B), a curing catalyst (ingredient C), and a silane of the foregoing general formula I (ingredient D).

This liquid silicone rubber composition is then dispersed in water to prepare a dispersion or emulsion in which the composition is present as the discontinuous phase. The resultant dispersion or emulsion is then contacted with a gas or liquid maintained at a temperature above that of the water in the dispersion in order to completely cure the liquid silicone rubber composition.

There are no particular limitations on the location of the hydroxyl groups of ingredient A, but it is preferable that they be on both ends of the molecule.

The silicon-bonded organic groups represented by $R^1$ present on ingredient A are unsubstituted or substituted monovalent hydrocarbon radicals. Examples of such radicals include but are not limited to alkyl radicals such as methyl, ethyl, propyl and butyl; alkenyl radicals such as vinyl and allyl; aryl radicals such as phenyl; aralkyl radicals such as benzyl; cycloalkyl radicals groups as cyclohexyl and cyclopentyl; and any of the foregoing hydrocarbon radicals wherein some or all of the hydrogen atoms are replaced with halogen atoms such as fluorine, chlorine and bromine. Examples of these halogen substituted radicals include but are not limited to 3-chloropropyl and 3,3,3-trifluoropropyl. The silicon-bonded organic groups are generally methyl, vinyl, and phenyl radicals, but it is not necessary that they all be the same, since combinations of different organic groups are permissible.

The molecular structure of ingredient A is preferably straight-chain, which includes straight chains with a straight chain with slight branching. There are no particular limitations on the molecular weight of ingredient A, but a molecular weight of 3000 or above improves the physical characteristics of the finely divided cured silicone rubber and is therefore preferable.

Specific examples of ingredient A include but are not limited to methylphenylsiloxane/dimethyl siloxane copolymers and dimethylpolysiloxanes with terminal hydroxyl groups at both ends of the molecular chain, and methylvinylsiloxane copolymers with either dimethylsiloxane or methylvinylsiloxane units. These organopolysiloxanes can be synthesized using known methods such as for example ring-opening polymerization of cyclic organopolysiloxanes; hydrolysis of straight-chain or branching-chain organopolysiloxanes containing groups capable of hydrolysis, such as alkoxy groups and acyloxy groups; and hydrolysis of one type or two or more types of diorgano-polysiloxanes.

Ingredient B is the crosslinking agent for ingredient A, and is an organohydrogenpolysiloxane containing at least 2 silicon-bonded hydrogen atoms per molecule. These hydrogen atoms can be located at the ends of the molecule, on non-terminal silicon atoms or at both positions. The silicon-bonded organic groups are selected from the same ones present on ingredient A described hereinabove, with the exception that aliphatically unsaturated hydrocarbon radicals such as vinyl are excluded.

The molecular structure of ingredient B is typically either straight-chain or cyclic, however branched chain and network type structures can also be used. These structures can be used singly or as mixtures of

2 or more types.

The organohydrogenpolysiloxanes suitable for use as ingredient B are selected from among those having a viscosity at 25°C.of from 0.001 to 1,000 Pa.s. If the viscosity is less than 0.001 Pa.s the volatility of this ingredient is increased and its content in the silicone rubber composition is unstable. If viscosity exceeds 1,000 Pa.s the industrial productivity is greatly reduced.

The silicon-bonded hydrogen content of ingredient B should constitute no more than 1 wt% of the this ingredient. The concentration of ingredient B in the curable silicone rubber composition is typically from 0.1 to 50 parts by weight per 100 parts by weight of ingredient A.

Ingredient C is a curing catalyst that promotes the condensation reaction between ingredients A and B. Examples of this catalyst include such organic acid metal salts as dibutyltin dilaurate, dibutyltin diacetate, stannous octoate, dibutyltin dioctoate, stannous laurate, iron(II) stannoctenate, lead laurate, and zinc octoate; titanium acid esters such as tetrabutyl titanate, tetrapropyl titanate, and dibutoxytitanium bis-(ethylacetoacetate); amine compounds such as n-hexylamine, guanidine, and their chlorates; and platinum compounds such as chloroplatinic acid in an alcohol or ketone solution, complex compounds of chloroplatinic acid and diketones, platinum black, and platinum in a carrier substance.

The above organic acid metal salts, titanium acid esters, or amine compounds or their chlorates should be added in a range of 0.01--5 parts by weight and preferably 0.05--2 parts by weight per 100 parts by weight of the ingredient A. The platinum-containing compounds are normally added in a range of from 0.1 to 1000 parts by weight, preferably from 1 to 100 parts by weight, of platinum metal per million parts by weight of the combined weight of ingredients A and B.

Ingredient D is the aforementioned silane represented by the general formula

$$\overset{R^1}{YSi}(OR^2)_{3-n} \qquad (I)$$

or a partial hydrolysis product of this silane. The substituent represented by Y is an alkenyl radical or a functional group selected from the group consisting of epoxy, amino, acryloxy, methacryloxy and mercapto where said functional group is bonded to the silicon atom of said silane by means of an alkylene radical, $R^1$ represents a monovalent hydrocarbon radical, $R^2$ is a hydrogen atom or is selected from the same group as $R^1$, and n is an integer from 0 to 2, inclusive.

Specific examples of the substituents represented by Y, $R^1$ and $R^2$ and preferred silanes suitable for use as ingredient D are disclosed in a preceding section of this specification.

In accordance with another embodiment of this invention the silicone rubber powder of the present invention is prepared from a liquid silicone rubber composition comprising a diorganopolysiloxane having at least two silicon-bonded alkenyl groups in each molecule, referred to hereinafter as ingredient A1, an organohydrogenpolysiloxane having at least two silicon-bonded hydrogen atoms in each molecule, referred to hereinbefore as ingredient B, a platinum-containing curing catalyst, referred to hereinafter as ingredient C1, and a silane of the aforementioned formula (I), referred to hereinbefore as ingredient D.

Ingredient A1 must contain at least two silicon-bonded lower alkenyl groups in each molecule. When fewer that two alkenyl groups are present, a network structure will not be formed and a suitable cured product, that is, a silicone rubber, will not be generated. These lower alkenyl groups are exemplified by vinyl, allyl, and propenyl.

The lower alkenyl groups may be present at any site on the molecule, but are preferably present at least at the molecular terminals. The molecular structure of this component can be straight chain, branch-containing straight chain, cyclic, and network: straight chains, optionally slightly branched, are preferred.

The molecular weight of ingredient A1 is not critical. This ingredient can range from low viscosity liquids to very high viscosity gums. The viscosity is preferably at least 100 centipoise (0.1 Pa.s) at 25 degrees Centigrade in order to obtain a rubbery elastomeric cured product.

The organopolysiloxanes suitable for ingredient A1 are exemplified by methylvinylpolysiloxanes, methylvinylsiloxane-dimethylsiloxane copolymers, dimethylvinylsiloxy-terminated dimethylpolysiloxanes, dimethylvinylsiloxy-terminated dimethylsiloxane-methylphenylsiloxane copolymers, dimethylvinylsiloxy-terminated dimethylsiloxane-diphenylsiloxane-methylvinylsiloxane copolymers, trimethylsiloxy-terminated dimethylsiloxane-methylvinylsiloxane copolymers, trimethylsiloxy-terminated dimethylsiloxane-methylphenylsiloxane-methylvinylsiloxane copolymers, dimethylvinylsiloxy-terminated methyl(3,3,3-trifluoropropyl)polysiloxanes, dimethylvinylsiloxy-terminated dimethylsiloxane-methyl(3,3,3-trifluoropropyl)-

siloxane copolymers, and polysiloxanes composed of $CH_2=CH(CH_3)_2SiO_{1/2}$ units, $(CH_3)_3SiO_{1/2}$ units, and $SiO_{4/2}$ units.Combinations of the above organopolysiloxanes can also be used in the present invention.

The organohydrogensiloxanes suitable for use as curing agents for ingredient A1 have been discussed in a preceding section of this specification.

Ingredient C1 is a catalyst for the addition reaction between silicon-bonded hydrogen atoms and alkenyl groups, and is concretely exemplified by chloroplatinic acid. This compound can optionally be dissolved in an alcohol or ketone and the resulting solution optionally aged. Other suitable catalysts include the platinum-containing materials discussed hereinbefore in connection with ingredient C.

Ingredient C1 is present at a concentration of from 0.1 to 1,000 weight parts as platinum-type metal for each 1,000,000 weight parts of the total quantity of components (a) and (b). The crosslinking reaction will not proceed satisfactorily at below 0.1 weight parts, while exceeding 1,000 weight parts is uneconomical. A concentration of from 1 to 100 weight parts as platinum-type metal is preferred in the typical case.

Ingredient D has been discussed in the preceding specification.

In accordance with the present method for preparing the additive material of this invention, a curable liquid silicone rubber composition and the silane corresponding to formula I are dispersed into water.

Methods for dispersing the aforementioned liquid curable silicone rubber compositions in water include introducing either ingredients A, B, C and D or ingredients A1, B, C1, and D separately into water and dispersing them in the water; premixing either ingredients A, B and D or ingredients A1, B and D, dispersing these ingredients in water and subsequently adding ingredient C or C1 as appropriate; and premixing the ingredients of the curable liquid silicone rubber composition and dispersing this mixture in water. Any of these methods may be used for the present invention, but generally the latter two methods are preferable.

The aqueous dispersion or emulsion that is subsequently cured to yield the finely divided silicone rubber particles of this invention can be formed by a number of methods. In accordance with one such method, the ingredients of the curable liquid silicone rubber composition are premixed and added to water, and the mixture is passed through a commercially available colloid mill to form an aqueous dispersion or emulsion of the silicone rubber composition. An aqueous dispersion or emulsion can also be obtained by placing the liquid silicone rubber composition in a homogenizer, adding water, and stirring.

Surfactants can be used to improve the dispersion of the aforementioned silicone rubber composition. In this instance, the silicone rubber composition is added to a surfactant/water preferably at a temperature of from 0° C to 25° C. This mixture is then emulsified to form an emulsion of the silicone rubber composition.

A variety of methods can be used to form this emulsion. In accordance with one method, surfactant and water are added to the silicone rubber composition, and the mixture is passed through an emulsifying unit such as a homogenizing mixer, homogenizer, or colloid mill to form an emulsion. Alternatively, the ingredients of the curable composition are placed in a homogenizer together with the surfactant, mixing carried out, and then water added and additional mixing carried out to yield the emulsion.

The surfactant can be any non-ionic or anionic surfactant or emulsifier known in the art which is effective in the formation of an aqueous silicone emulsion, with no particular limitations other than avoiding substances containing functional groups or atoms which react with the silicon-bonded hydrogen atoms of ingredient B, or reduce the activity of this ingredient.

The temperature range within which the dispersion or emulsion is formed is preferably from 0 to 25° C. If the temperature falls below 0° C, the water may freeze, making it difficult to form the dispersion or emulsion. At temperatures above 25° C, the dispersion or emulsion is unstable, and there is a tendency for the resulting silicone rubber particles to be non-uniform in shape.

The dispersed or emulsified silicone rubber composition is then cured by heating it or contacting it with a gas or liquid maintained at a higher temperature than the curable composition until curing of the silicone rubber composition is completed.

If the curing temperature is lower than the temperature of the water of the initial dispersion, there will be a reduction in the curing rate and the objectives of this invention will not be realized. The temperature of the heated gas or liquid is preferably 50° C or above.

There are no particular limitations on the liquid used. It is desirable to avoid liquids which will interfere with curing of the silicone rubber composition and liquids which will act as solvents for the silicone rubber composition.

Specific examples of suitable liquids for providing the heat need to cure the silicone rubber composition include water, liquid paraffin, waxes, and liquid compounds used in various thermal media such as dimethyl silicone oil and phthalic acid esters. Water is a preferred liquid because of its particularly large heat capacity and ease of use.

There are no particular limitations on the gases used to cure the dispersed or emulsified silicone rubber composition, providing that they promote curing of the silicone rubber composition, however it is best to avoid flammable gases. Specific examples of suitable gasses include air, nitrogen gas,and various non-flammable liquid gases.

There are a number of methods which involve bringing the aforementioned dispersion into contact with a gas or liquid having a temperature higher than that of said dispersion to complete curing of the aforementioned silicone rubber composition. One method involves the hardening of said dispersion by leaving it in the heated liquid or gas, or spraying the dispersion into a high-temperature gas.

Another method for curing the silicone rubber composition involves supplying small quantities of the dispersed or emulsified composition to a mixer equipped with an agitator and filled with water heated to a specified temperature and providing continuous contact between the water and the dispersion or emulsion as agitation is continued. In a third method, a heated liquid is introduced into the dispersion or emulsion with continuous stirring. The quantity of heated liquid used here should preferably be at least twice the total volume of the dispersion or emulsion.

The finely divided silicone rubber particles of this invention can be used alone or as an additive for other materials. When used as an additive the silicone rubber particles can improve such physical properties as mechanical strength, water resistance, and lubricity in various materials.

Applications for which the cured silicone rubber particles can be used alone include but are not limited to solid lubricants, water-repellent agents, release agents, anti-tack agents, greases, oils, cements, plasters, paints, casting materials, molding materials, films, agricultural chemicals, and medical applications.

When the present cured silicone rubber particles are used as additives they can be blended together with polymers that include, for example, natural rubber, polychloroprene rubber, polybutadiene rubber, SBR, EPR, and EPT rubbers, polyisoprene rubber, polyisobutene rubber, polyacrylic acid ester rubber, polyurethane rubber, butadiene-acrylonitrile copolymer rubber, polyester rubber, polysulfide rubber, fluorinated rubber, silicone rubber, and copolymers and mixtures of these rubbers.

The particles can also be incorporated as additives into a variety of resins, including, for example, polyamides represented by the polyamides such as nylon-5, nylon-6, nylon-7, nylon-8, nylon-9, nylon-10, nylon-11, nylon-12, and nylon-6,6; saturated polyesters represented by such substances as polyethylene terephthalates, polybutylene terephthalate, polyhydrogenated xylylene terephthalate, polycaprolactone, and polypivalolactone; polycarbonates, acrylonitrile/styrene copolymers, polystyrene, polyethylene, polypropylene, polybutadiene, polyvinyl chloride, polyvinylidine chloride, polyacrylonitrile, polyvinyl alcohol, polyvinyl acetate, polyvinyl butyral, polymethyl methacrylate, fluorine-containing resins, other polyolefin resins, polyethylene glycol, polypropylene glycol, polytetrahydrofuran, Penton(R), polyphenylene oxide, polyacetal and other polyethers, phenol resins, polyurethane resins, acrylic resins, urea resins, unsaturated polyesters, melamine resins, phthalic acid resins, polyimide resins, silicone resins, celluloid, acetyl cellulose, epoxy acrylates, polyacrylates, epoxy resins, and a variety of other thermoplastic and thermosetting resins, resins which can be hardened by means of ultraviolet, gamma-rays, electron beams, or other high-energy radiation, as well as block copolymers, random copolymers, and blends of these resins.

The resins may contain a variety of additives, including but not limited to powdered inorganic fillers, fibers such as glass or carbon fibers used as fiber fillers or as reinforcing materials, agents to increase heat stability, agents to improve weather resistance, other stabilizers, reinforcing agents, pigments and dyes.

The following examples describe preferred embodiments of the cured silicone rubber particles of this invention, methods for their production and the use of these particles as reinforcing additives for various polymers and resins. The examples should not be interpreted as limiting the scope of the present invention as defined in the accompanying claims. All parts in the examples are by weight and viscosity values are measured at 25°C.

## Example 1

To 95 parts of dimethyl polysiloxane containing terminal hydroxyl groups on both ends of the molecule, a hydroxyl group content of 1.3 wt% and a viscosity of 80 centipoise was added 5 parts gamma-glycidoxypropyltrimethoxysilane and 20 parts of a dimethylhydrogensiloxy-terminated methylhydrogenpolysiloxane containing 1.5 wt% of silicon-bonded hydrogen and having a viscosity of 10 centipoise.

A second mixture, B, was prepared by blending 1.0 part of dibutyltin dioctoate, 95 parts of the same dimethyl polysiloxane used to prepare mixture A and 5 parts of gamma-glycidoxypropyl trimethoxysilane.

Mixtures A and B were placed in separate storage tanks, that were cooled to -10°C. 500 parts of

Mixture A and 500 parts of Mixture B were transferred from the storage tanks to a static mixer manufactured by Tokushu Kika KK and mixed until uniform. The resultant mixture was transferred to a colloid mill manufactured by Manton-Gaulin SA into which 20 parts of the reaction product of ethylene oxide and trimethyl nonanol (a non-ionic surfactant available as Tergitol TMN-6 from Union Carbide Corporation and 6000 parts of ion-exchanged water were added simultaneously. The resultant mixture was passed through a colloid mill rotating at a speed of 1400 rpm using a spacing of 1 mm. to yield an aqueous emulsion of a curable liquid silicone rubber composition.

This emulsion was allowed to stand at room temperature for 3 hours, after which it was sprayed at a rate of 3 liters/hour into gas heated to a temperature of 300°C. The aforementioned silicone rubber composition was completely cured by spraying it into heated air to yield a finely divided cured silicone rubber of this invention. This product was collected using a cyclone separator and back filter, to yield 1900 g of silicone rubber particules having an average particle diameter of 5 micrometers.

A thermosetting epoxy resin composition was prepared by blending 10 parts of these silicone rubber particles wiht 100 parts of a heat curable epoxy resin available as Chisso Nokkusu 221 from Chisso KK, 75 parts of acid anhydride HN-5500, manufactured by Hitachi Chemical Co. and 1.0 parts of 1,8-diazobiscyclo-(5,4,0)-7-undecane. Mixing was carried out to yield a thermally curable epoxy resin composition. This composition was placed in an aluminum dish and heated at 175°C for 30 minutes to yield a cured product.

When a cross-section of this product was examined using a scanning electron microscope it was observed that the silicone rubber particles were dispersed uniformly throughout the epoxy resin matrix, and that these particles were in contact with and bonded to the epoxy resin layer.

For purposes of comparison, a finely divided cured silicone rubber was prepared in the same way as described in the preceding portion of this example, except that gamma-glycidoxypropyltrimethoxysilane was omitted from the curable liquid silicone rubber composition. The average diameter of the cured silicone rubber particles was 5 micrometers. Examination of the cured epoxy resin revealed that whie the silicone rubber particles were uniformly dispersed throughout the epoxy resin, there were gaps between the surfaces of the silicone rubber particles and the epoxy resin matrix that prevented bonding between these two materials.

## Example 2

To 90 parts of a hydroxyl terminated dimethylpolysiloxane containing 1.3 wt% of hydroxyl groups and having a viscosity of 0.08 Pa.s was added 10 parts of vinyltrimethoxysilane, manufactured by Toray Silicone Co., Ltd. and 20 parts of the same methylhydrogenpolysiloxane used in Example 1. The resultant mixture was blended to yield Mixture A.

Mixture B was prepared by adding 90 parts of the same dimethylpolysiloxane used in mixture A to 10 parts of vinyltrimethoxysilane and 1.0 parts of dibutyltin dioctoate, and blending the resultant mixture to homogeniety. These mixtures were blended and emulsified as described in the preceding Example 1, being mixed and dispersed in a colloid mill to yield an aqueous emulsion a curable liquid silicone rubber composition. This emulsion was allowed to stand at room temperature for 1 hour, after which it was sprayed at a rate of 3 liters/HR into a gas that had been heated to 250°C.

The silicone rubber composition cured completely as a spray to yield a finely divided silicone rubber additive of this invention and was collected using a cyclone separator and a bag filter, to yield 950 g of silicone rubber particles having an average particle diameter of 6 micrometers.

Ten parts of these particles and 0.1 part of dicumyl peroxide were melt blended with 100 parts of polyethylene resin available as Haizekkusu 1300J, manufactured by Mitsui Petrochemical Industries. The process was carried out using Henschel mixer and the resultant compositon was converted into pellets in a pelletizer at 230°C. These pellets were dried in a 70°C oven for 3 hours, after which they were injection molded into a metal mold using a melt temperature of 220oC, a mold temperature of 60°C, an injection time 10 seconds, and cure time of 30 seconds.

A cross-section of the resultant molded article was examined with a scanning electron microscope, which revealed that the particles of cured rubber were in contact with and bonded to the polyethylene matrix.

Example 3

To 10 parts of the cured silicone rubber particles obtained in Example 2 was added 100 parts of dimethylpolysiloxane raw rubber containing terminal hydroxyl groups at both ends of the molecular chain and 0.3 parts of 2,5-dimethyl-2,5-di(t-butylperoxy)hexane. This combination was blended to homogeniety using a 2 roll mill and was then press-cured at 170°C for 10 minutes to yield a sheet 2 mm in thickness.

Eamination of a cross-section of this sheet using a scanning electron microscope revealed that the silicone rubber particles were completely in contact with an bonded to the dimethylpolysiloxane silicone rubber matrix.

Example 4

To 100 parts of a hydroxyl-terminated dimethylpolysiloxane containing 0.2 wt% of hydroxyl groups and having a viscosity of 2 Pa.s was added 3 parts of a trimethylsiloxy-terminated methyhydrogenpolysiloxane containing 1.5 wt% of silicon bonded hydrogen and 8 parts of 3-methocryloxypropylthmethoxysilane to form mixture A. Part B was prepared by blending 100 parts of the same dimethylpolysiloxane used in part A with 0.6 parts of an isopropyl alcohol solution of chloroplatinic acid containing 3 wt% of platinum.

Mixtures A nd B of this example were placed in separate storage tanks that were cooled to -10°C. 250 parts of Mixture A and 250 parts of Mixture B were transferred from the storage tanks to a 20 element static mixer available from Tokushu Kika Kogyo KK and blended to homogeniety. 500 parts of the resulting mixture were transferred to a colloid mill manufactured by Manton-Gaulin SA together with 500 parts of ion exchanged water. The composition was mixed at 1400 rpm using a blade spacing of 0.1 mm. to yield an aqueous emulsion of a curable liquid silicone rubber composition. The composition was cured by adding it to 2000 cc of water heated to a temperature of 80°C. with stirring to yield 500 parts of silicone rubber particles corresponding to the present invention.

Examination of the resultant finely divided silicone rubber particles using a scanning electron microscope, revealed that at least 90% were of indeterminate shape and had a diameter of 100 micrometers.

Example 5

To 90 parts of hydroxyl-terminated dimethylpolysiloxane containing 1.3% of hydroxyl group and having a viscosity of 0.080 Pa.s was added 10 parts of gamma-aminopropyltrimethoxysilane, 20 parts of a dimethylhydrogensiloxy-terminated methylhydrogenpolysiloxane containing 0.15 % of silicon-bonded hydrogen and exhibiting a viscosity of 0.02 Pa.s and 0.5 parts of dibutyltin dioctoate.

The resultant mixture was blended to homogeniety and then passed through a colloid mill as described in the preceding Example 1 to yield an aqueous emulsion of a curable liquid silicone rubber composition. The composition was allowed to stand at room temperature for 1 hour, at which time it was sprayed into a gas heated to a temperature of 230°C. The resultant finely divided cured silicone rubber was found to have an average particle diameter of 10 micrometers.

Five parts of these cured silicone rubber particles were dispersed in a 30 percent solution of a thermoplastic polyurethane resin available as P22SRNAT from Nihon Polyurethane Kogyo KK. The solvent was a 1:1 mixture of methylethyl ketone and dimethyl formaldehyde.

The resulting mixture of finely divided silicone rubber particles and polyurethane resin solution was painted onto a polyester resin film surface using a #20 draw-down bar. The coated film was placed in a heating oven for 5 minutes at 60°C to volatilize the solvent, yielding a polyurethane resin coating. The steps of coating, solvent volatilization, and film formation was repeated 5 times to ultimately yield a 0.1 mm-thick coating of the polyurethane resin on the polyester resin film.

The coefficient of friction, tensile strength, and elasticity of the polyurethane coating were then measured. The coefficient of friction was measured as follows:

The coated surfaces of two polyurethane resin-coated films were placed together on a horizontal surface to form 2 layers, and on top of this was placed a 100 g weight. Next, the upper polyurethane resin film was pulled in a horizontal direction, and resistance values were measured using a universal horizontal tensile tester manufactured by Sangyo Tester KK. The tensile strength and elasticity of the polyurethane

resin film were measured using the test sample in the form of dumbbells (no. 3 in accordance with Japanese Industrial Standards), using a vertical tensile strength tester available as Quick Reader from Uejima Seisaku-sho KK. The results of these tests are recorded in Table 1.

For purposes of comparison, a polyurethane resin film was prepared as described above except that the cured silicone rubber particles was omitted. The coefficient of friction, tensile strength, and elasticity were measured for this film in the same way as described in the first part of this example , and the results also appear in Table 1.

Table 1

| Item Measured | Present Invention | Comparative Example |
|---|---|---|
| Coefficient of Friction | | |
| Rubbing speed 100 mm/min | 1450 | 8006 |
| Rubbing speed 400 mm/min | 1540 | 9722 |
| Tensile strength $kg/cm^2$ | 142 | 185 |
| Elasticity $kg/cm^2$ | 515 | 515 |

Example 6

A mixture A was prepared by mixing 100 parts dimethylvinylsiloxy-terminated dimethylpolysiloxane having a viscosity of 2,000 centipoise (2 Pa.s) and a vinyl content of 0.25 weight %, 3 parts of a trimethylsiloxy-terminated methylhydrogenpolysiloxane having a viscosity of 10 centipoise (0.01Pa.s) and a silicon-bonded hydrogen content of 1 weight%, and 5 parts of gamma-glycidoxypropyltrimethoxysilane. The viscosity of this mixture was 2 Pa.s.

A similar mixture B was prepared by mixing 100 parts of the dimethylpolysiloxane as described above with 0.3 parts isopropanolic chloroplatinic acid solution containing 3 weight % of platinum.

Mixtures A and B were placed in separate liquid silicone rubber composition tanks, and these tanks were then cooled to minus 30 degrees Centigrade. 250 Parts mixture A and 250 parts mixture B were then transferred to a homogenizer which had been cooled in advance to plus 5 degrees Centigrade, and were mixed to homogeneity. The temperature of the mixture at this point was plus 5 degrees Centigrade. 100 Parts non-ionic surfactant (an ethylene oxide adduct of trimethylnonanol, available as Tergitol TMN-6 from Union Carbide Corporation) was then added, and, after mixing for 1 minute, 1,000 parts ion-exchanged water was added and the mixture was then emulsified for 5 minutes at 800 rpm. The temperature of the emulsion at this point was plus 10 degrees Centigrade.

50 Parts of this emulsion was removed and placed in a stirrer-equipped flask, 2,000 parts water at a temperature of 40 °C. was introduced, and the resultant mixture was stirred at 10 rpm to yield a cured silicone rubber powder. When the cured silicone rubber powder product was washed with water and dried and then inspected under a microscope it was found to have an average particle diameter of 10 microns and a shape approximately that of a true sphere.

The dispersibility and adhesion of this silicone rubber powder with respect to epoxy resin were evaluated as described in Example 1, and it was found that the silicone rubber powder was uniformly dispersed in the epoxy resin and its surface was in contact with and bonded to the epoxy resin layer.

## Claims

1. A finely divided additive material having a particle diameter of 1 mm or less and comprising a cured silicone rubber and a from 0.1 to 10 percent, based on the weight of said material, of a silane or partial hydrolysis product thereof, where said silane is represented by the general formula

$$\overset{R^1}{YSi}(OR^2)_{3-n},$$

Y represents a terminally unsaturated alkenyl radical or a functional group bonded to the silicon atom of said silane by an alkylene radical, said functional group is selected from the group consisting of epoxy, amino, acryloxy, methacryloxy and mercapto, $R^1$ is a monovalent hydrocarbon radical, $R^2$ is a hydrogen atom or a monovalent hydrocarbon radical selected from the same group as $R^1$, and $\underline{n}$ is an integer from 0 to 2, inclusive, and where said silane or partial hydrolysis product thereof is present in the unreacted form or is chemically bonded to said silicone rubber.

2. An additive material according to claim 1 where the concentration of said silane is from 0.5 to 15 percent, based on the weight of said material, the cured silicone rubber is selected from the group consisting of organoperoxide-cured silicone rubber prepared by heating a diorganopolysiloxane containing at least one vinyl radical in the presence of an organoperoxide; silicone rubber prepared from a composition comprising a diorganopolysiloxane containing silicon-bonded vinyl groups, a diorganopolysiloxane containing silicon-bonded hydrogen atoms and a platinum compound; silicone rubber cured in the presence of an organotin compound or by a dehydrogenation/-condensation reaction between a diorganopolysiloxane having active hydrogen-containing functional group on both ends of the molecule and a diorganopolysiloxane having silicon-bonded hydrogen atoms; and silicone rubber cured by a condensation reaction between a diorganopolysiloxane having terminal hydroxyl groups and organosilane containing hydrolyzable groups in the presence of an organotin compound or a titanic acid ester.

3. In an improved method for producing a finely divided cured silicone rubber additive material having a particle diameter of 1 mm or less, said method comprising the sequential steps of

I. dispersing as the discontinuous phase in water a curable silicon rubber composition comprising

(A) a diorganopolysiloxane having at least 2 silicon-bonded hydroxy or 2 silicon-bonded alkenyl groups per molecule,

(B) an organohydrogenpolysiloxane having at least 2 silicon-bonded hydrogen atoms per molecule, and

(C) a curing catalyst in an amount sufficient to promote curing of said composition

II. bringing the resultant dispersion or emulsion into contact with a gas or liquid having a temperature higher than that said water to cure said composition in the form of said finely divided additive having a particle diameter of up to 1 mm., the improvement comprising the presence in said curable silicone rubber composition of

(D) a silane corresponding to the general formula

$$\overset{R^1}{YSi}(OR^2)_{3-n}$$

where Y represents a terminally unsaturated alkenyl radical or a functional group bonded to the silicon atom of said organosilicon compound by an alkylene radical, said functional group is selected from the group consisting of epoxy, amino, acryloxy, methacryloxy and mercapto, $R^2$ represents a hydrocarbon radical selected from the same group as $R^1$, the value of $\underline{n}$ is from 0 to 2, inclusive, and said silane or hydrolysis product thereof is present either an unreacted form or chemically bonded within said particle.